# EUROPEAN PATENT APPLICATION

(11) **EP 4 629 714 A1**
(43) Date of publication of application: **08.10.2025**
(21) Application number: 22966914.8
(22) Date of filing: 01.12.2022
(51) Int. Cl.: H04W 64/00

(54) **INFORMATION PROCESSING METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: SHEN, Yang, Beijing 100085 (CN); WANG, Xinli, Beijing 100085 (CN)
(74) Representative: Dehns Germany Partnerschaft mbB
(86) International application number: PCT/CN2022/136033
(87) International publication number: WO 2024/113326

(57) **Abstract**

Provided in the embodiments of the present disclosure are an information processing method and apparatus, a communication device and a storage medium. The information processing method executed by a first device comprises: receiving a first ranging/sidelink (SL) positioning request, wherein the first ranging/SL positioning request comprises first identification information of a first user equipment (UE) and second identification information of a second UE; and when a plurality of first ranging/SL positioning requests are received and the first ranging/SL positioning requests carry the same first identification information and the same second identification information, combining the plurality of first ranging/SL positioning requests to obtain a second ranging/SL positioning request, wherein the measurement result of the second ranging/SL positioning request is used for responding to each first ranging/SL positioning request.

## Description

### TECHNICAL FIELD

The present disclosure relates to, but is not limited to, the technical field of wireless communication, and in particular to, an information processing method and apparatus, a communication device and a storage medium.

### BACKGROUND

The ranging service can be used to determine the relative distance or relative direction between two User Equipments (UEs) via a direct communication connection.

The measurement results obtained by the ranging service may be used for other services related to location and/or distance. For example, the measurement results of the ranging service may be used for instant communication and/or social location sharing based on distance.

### SUMMARY

Embodiments of the present disclosure provide an information processing method and apparatus, a communication device, and a storage medium.

A first aspect of the embodiments of the present disclosure provides an information processing method, which is performed by a first device and includes:
receiving a first ranging/sidelink (SL) positioning request, where the first ranging/SL positioning request includes: first identification information of a first user equipment (UE) and second identification information of a second UE, and
in a case that a plurality of first ranging/SL positioning requests are received and the first ranging/SL positioning requests carry same first identification information and same second identification information, combining the plurality of first ranging/SL positioning requests to obtain one second ranging/SL positioning request, where a measurement result of the second ranging/SL positioning request is used to respond to each of the first ranging/sidelink (SL) positioning requests.

A second aspect of the embodiments of the present disclosure provides an information processing apparatus, where the apparatus includes:
a receiving module, configured to receive a first ranging/sidelink (SL) positioning request; where the first ranging/SL positioning request includes: first identification information of a first user equipment (UE) and second identification information of a second UE; and
a combining module, configured to combine a plurality of first ranging/SL positioning requests to obtain one second ranging/SL positioning request in a case that the plurality of first ranging/SL positioning requests are received and the first ranging/SL positioning requests carry same first identification information and same second identification information, where a measurement result of the second ranging/SL positioning request is used to respond to each of the first ranging/sidelink (SL) positioning requests.

A third aspect of the embodiments of the present disclosure provides an information processing method, where the method includes:
sending, by a second device, a first ranging/sidelink (SL) positioning request; where the first ranging/SL positioning request includes: first identification information of a first user equipment (UE) and second identification information of a second UE;
receiving, by a first device, the first ranging/sidelink (SL) positioning request; in a case that a plurality of first ranging/SL positioning requests are received and the first ranging/SL positioning requests carry same first identification information and same second identification information, combining the plurality of first ranging/SL positioning requests to obtain one second ranging/SL positioning request, where a measurement result of the second ranging/SL positioning request is used to respond to each of the first ranging/sidelink (SL) positioning requests;
where the first UE and the second UE perform measurement according to the second ranging/SL positioning request to obtain one piece of measurement data or one measurement result; where the measurement data is used to generate the measurement result.

A fourth aspect of the embodiments of the present disclosure provides a communication system, including:
a second device, configured to send a first ranging/sidelink (SL) positioning request; where the first ranging/SL positioning request includes: first identification information of a first user equipment (UE) and second identification information of a second UE;
a first device, configured to receive the first ranging/sidelink (SL) positioning request; in a case that a plurality of first ranging/SL positioning requests are received and the first ranging/SL positioning requests carry same first identification information and same second identification information, combine the plurality of first ranging/SL positioning requests to obtain one second ranging/SL positioning request, where a measurement result of the second ranging/SL positioning request is used to respond to each of the first ranging/sidelink (SL) positioning requests;
where the first UE and the second UE are configured to perform measurement according to the second ranging/SL positioning request to obtain one piece of measurement data or one measurement result; where the measurement data is used to generate the measurement result.

A fifth aspect of the embodiments of the present disclosure provides a communication device, including a processor, a transceiver, a memory, and an executable program stored in the memory and capable of being run by the processor, when the processor runs the executable program, the processor executes the information processing method provided by any technical solution of the first aspect or the third aspect.

A sixth aspect of the embodiments of the present disclosure provides a computer storage medium, where the computer storage medium stores an executable program, and the executable program implements the information processing method provided by any technical solution of the first aspect or the third aspect when being executed by a processor.

In the technical solution provided by the embodiments of the present disclosure, in the technical solution provided by the embodiments of the present disclosure, if a plurality of first ranging/SL positioning requests carry the same first identification information and the same second identification information, it means that the same UEs are involved. Therefore, in order to reduce unnecessary measurements, etc., the plurality of first ranging/SL positioning requests with the same first identification information and the same second identification information may be combined to obtain one second ranging/SL positioning request. When performing ranging services, the first UE and the second UE can respond to only this one second ranging/SL positioning request, which reduces unnecessary measurements and positioning calculations, reduces UE power consumption, and extends UE standby time.

It should be understood that the foregoing general description and the following detailed description are exemplary and explanatory only and do not limit the embodiments of the present disclosure.

### BRIEF DESCRIPTION OF THE DRAWINGS

The accompanying drawings herein are incorporated into and constitute a part of the description, illustrate embodiments consistent with the present disclosure, and are used together with the description to explain the principles of the embodiments of the present disclosure.
FIG. 1 is a schematic structural diagram of a wireless communication system shown according to an exemplary embodiment;
FIG. 2 is a schematic flow chart of an information processing method shown according to an exemplary embodiment,
FIG. 3 is a schematic diagram of relative positioning between a reference UE and an observer UE shown according to an exemplary embodiment;
FIG. 4 is a schematic diagram of ranging UEs and a coverage of the 5G network shown according to an exemplary embodiment;
FIG. 5A is a schematic flow chart of an information processing method shown according to an exemplary embodiment;
FIG. 5B is a schematic flow chart of an information processing method shown according to an exemplary embodiment;
FIG. 5C is a schematic flow chart of an information processing method shown according to an exemplary embodiment;
FIG. 5D is a schematic flow chart of an information processing method shown according to an exemplary embodiment;
FIG. 5E is a schematic flow chart of an information processing method shown according to an exemplary embodiment;
FIG. 5F is a schematic flow chart of an information processing method shown according to an exemplary embodiment;
FIG. 5G is a schematic flow chart of an information processing method shown according to an exemplary embodiment;
FIG. 6 is a schematic flow chart of an information processing method shown according to an exemplary embodiment;
FIG. 7 is a schematic structural diagram of an information processing device shown according to an exemplary embodiment;
FIG. 8 is a schematic structural diagram of a UE shown according to an exemplary embodiment; and
FIG. 9 is a schematic structural diagram of a network device shown according to an exemplary embodiment.

### DETAILED DESCRIPTION

Exemplary embodiments will be described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure. To the contrary, they are merely examples of apparatuses and methods that are consistent with some aspects of the embodiments of the present disclosure.

Terms used in the embodiments of the present disclosure are used solely for the purpose of describing certain embodiments and are not intended to limit the embodiments of the present disclosure. The singular forms of "a/an", "said" and "the" used in the embodiments of the present disclosure are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, and such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "when..." or "while..." or "in response to determination" or "in the case..."

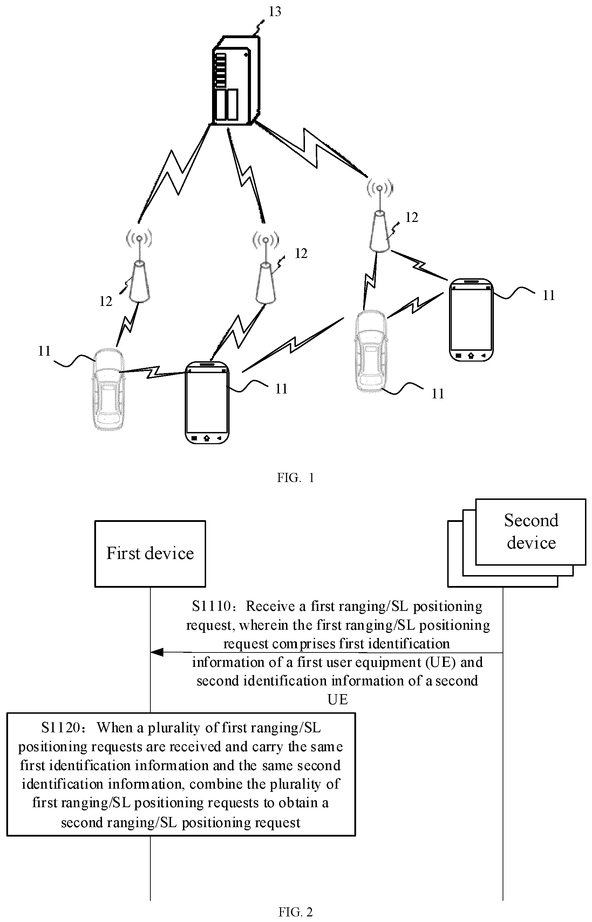

Referring to FIG. 2, a schematic structural diagram of a wireless communication system provided by an embodiment of the present disclosure is illustrated. As shown in FIG. 2, the wireless communication system is a communication system based on mobile communication technology, and the wireless communication system may include: several terminals 11 and access devices 12.

The terminal 11 may refer to a device that provides voice and/or data connectivity to a user. The terminal 11 may communicate with one or more core networks via a radio access network (RAN). The terminal 11 may be an Internet of Things (IoT) terminal, such as a sensor device, a mobile phone (or a cellular phone), and a computer with an IoT terminal. For example, it may be a fixed, portable, pocket-sized, handheld, computer-built-in, or vehicle-mounted device. For example, a station (STA), a subscriber unit, a subscriber station, a mobile station, a mobile, a remote station, an access point, a remote terminal, an access terminal, a user terminal, a user agent, a user device, or a user equipment (terminal). Alternatively, the terminal 11 may also be a device of an unmanned aerial vehicle. Alternatively, the terminal 11 may also be a vehicle-mounted device, such as a driving computer with a wireless communication function, or a wireless communication device connected to an external driving computer. Alternatively, the terminal 11 may also be a roadside device, for example, a street lamp, a signal lamp or other roadside device with a wireless communication function.

The access device 12 may be a network side device in a wireless communication system. The wireless communication system may be a 4th mobile communication technology (4G) system, also known as a long term evolution (LTE) system; or, the wireless communication system may be a 5G system, also known as a new radio (NR) system or a 5G NR system. Alternatively, the wireless communication system may be a next generation system of the 5G system. The access network in the 5G system may be referred to as a new generation-radio access network (NG-RAN). Alternatively, it may be an MTC system.

The access device 12 may be an evolved access device (eNB) used in a 4G system. Alternatively, the access device 12 may also be an access device (gNB) using a centralized and distributed architecture in a 5G system. When the access device 12 uses the centralized and distributed architecture, it usually includes a central unit (CU) and at least two distributed units (DUs). The central unit is provided with protocol stacks of a packet data convergence protocol (PDCP) layer, a radio link layer control protocol (Radio Link Control, RLC) layer, and a media access control (MAC) layer; and the distributed unit is provided with a protocol stack of a physical (PHY) layer. The specific implementation manner of the access device 12 is not limited by the embodiments of the present disclosure.

A wireless connection may be established between the access device 12 and the terminal 11 through a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface may also be a wireless air interface based on the next generation mobile communication network technology standard of 5G.

As shown in FIG. 2, an embodiment of the present disclosure provides an information processing method, which is performed by a first device and includes the following steps.

In S1110, a first ranging/SL positioning request is received; where the first ranging/SL positioning request includes: first identification information of a first user equipment (UE) and second identification information of a second UE.

In S1120: in a case that a plurality of first ranging/SL positioning requests carrying the same first identification information and the same second identification information are received, the plurality of first ranging/SL positioning requests are combined to obtain one second ranging/SL positioning request.

A measurement result of the second ranging/SL positioning request is used to respond to each of the first ranging/sidelink (SL) positioning requests.

The first device may be a network device or a UE. For example, if the first device is a network device, the network device may be an access device 12 or a core network device as shown in FIG. 1. The UE may be a terminal 11 as shown in FIG. 1.

In an embodiment of the present disclosure, taking into account a scenario with frequent ranging, if a plurality of first ranging/SL positioning requests are received simultaneously at a time point or within a very small time period, the plurality of ranging/SL positioning requests may be combined according to the measurement content and/or measurement requirements involved in the first ranging/SL positioning requests.

The first ranging/SL positioning request may come from a UE to be ranged or positioned or an application function (AF). The plurality of first ranging/SL positioning requests may come from different UEs and/or AFs. For example, the AF may provide the first ranging/SL positioning request to the first device through a network exposure function (NEF).

A second device of the first ranging/SL positioning request may be a UE and/or an AF.

The first identification information and the second identification information may be various information capable of identifying a UE. For example, the first identification information and the second identification information may be: UE information identification (Info Identification, ID).

If the first UE is a target UE, the second UE is a reference UE or an observer UE. If the second UE is a target UE, the first UE is a reference UE or an observer UE.

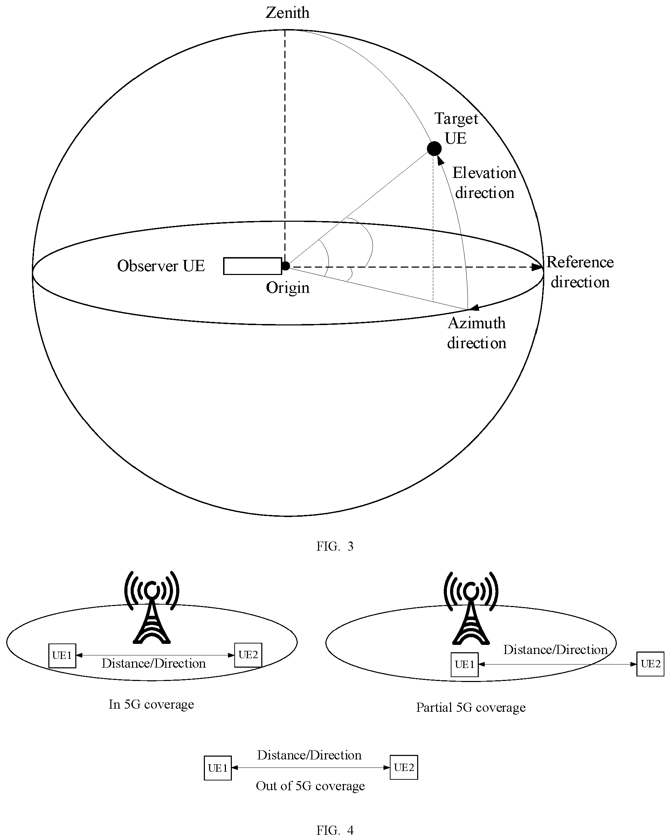

As shown in FIG. 3, the observer UE has a reference plane and a reference direction located in the reference plane. A relative direction between the target UE and the observer UE may be: an angle between a line connecting the target UE and the observer UE and the reference direction.

FIG. 3 also shows: an azimuth direction and an elevation direction. The azimuth direction of the target UE is an angle between the reference direction and a straight line from the observer UE to the target UE. The straight line is projected on the same plane as the reference direction perpendicular to the zenith. An elevation angle direction of the target UE is an angle above the horizontal plane.

If a plurality of first ranging/SL positioning requests carry the same first identification information and the same second identification information, it means that the same UEs are involved. In order to reduce unnecessary measurements, the plurality of first ranging/SL positioning requests with the same first identification information and the same second identification information may be combined to obtain one second ranging/SL positioning request. When performing ranging services, the first UE and the second UE can respond to only this one second ranging/SL positioning request, which reduces unnecessary measurements and positioning calculations, reduces UE power consumption, and extends UE standby time.

The fact that the plurality of first ranging/SL positioning requests carry the same the first identification information and the same second identification information means: any two first ranging/SL positioning requests carry the same first identification information and the same second identification information.

In the embodiments of the present disclosure, "in the case that the received plurality of first ranging/SL positioning requests carry the same first identification information and the same second identification information" may be understood as at least one of the following:
when the received plurality of first ranging/SL positioning requests carry the same first identification information and the same second identification information; or
in response to the received plurality of first ranging/SL positioning requests carrying the same first identification information and the same second identification information.

Of course, the above are just examples, and the specific implementation is not limited to the above examples.

The "combining" in the phrase "combining the plurality of first ranging/SL positioning requests to obtain one second ranging/SL positioning request" may be understood as: any operation that converts the plurality of first ranging/SL positioning requests into one second ranging/SL positioning request.

For example, the "combining the plurality of first ranging/SL positioning requests to obtain one second ranging/SL positioning request" may include, but is not limited to, at least one of the following:
selecting one of the first ranging/SL positioning requests as the second ranging/SL positioning request, and ignoring or discarding the unselected first ranging/SL positioning request(s);
determining a second parameter according to the first parameter carried by each of the first ranging/SL positioning requests; and generating the second ranging/SL positioning request according to the second parameter.

The second ranging/SL positioning request and the first ranging/SL positioning request are messages with the same message format and/or messages that follow the same communication protocol.

The first parameter and the second parameter may include at least one of the following:

Quality of Service (QoS), which indicates the measurement results and/or the latency that measurement process needs to meet and/or accuracy of the measurement results;
measurement content information, which indicates a measurement result between the first UE and the second UE. The measurement result includes: a relative distance and/or a relative angle, etc.

The ranging service provided by the embodiments of the present disclosure may occur in a location covered by a mobile communication network (e.g., a 5G network) or in a location not covered by a 5G network.

As shown in FIG. 4, UE1 and UE2 are both located within the coverage of the 5G network, one of UE1 and UE is located within the coverage of the 5G network, or both UE1 and UE2 are located outside the coverage of the 5G network. One of UE1 and UE2 in FIG. 4 may be the first UE, and the other may be the second UE.

In summary, the ranging service between the first UE and the second UE2 may occur in any of the above three scenarios.

For example, the second ranging/SL positioning request may include: the first identification information and the second identification information.

In some other embodiments, the second ranging/SL positioning request may include: a ranging/SL positioning indication, used to instruct the first UE and/or the second UE to perform ranging and positioning, etc.

In some embodiments, the first ranging/SL positioning request includes: measurement content information indicating measurement content.

The measurement content may include at least one of the following:
measuring a relative distance between the first UE and the second UE;
measuring a relative position between the first UE and the second UE;
measuring an absolute position of the first UE; and
measuring an absolute position of the second UE.

It should be noted that: in one embodiment, the first device will obtain one measurement result and return the measurement result to each of the second devices that send the plurality of first ranging/SL positioning requests. For example, the first device may receive the measurement result from a UE or other network device, or the first device receives measurement data and generates the measurement result based on the measurement data by itself. In another embodiment, the first device may be a network device, in which case the first device receives the first ranging/SL positioning request and combines a plurality of first ranging/SL positioning requests to obtain one second ranging/SL positioning request. The first device will not obtain the measurement result, but a measurement result obtained based on the second ranging/SL positioning request will be sent to each of the second devices of the plurality of first ranging/SL positioning requests without passing through the first device.

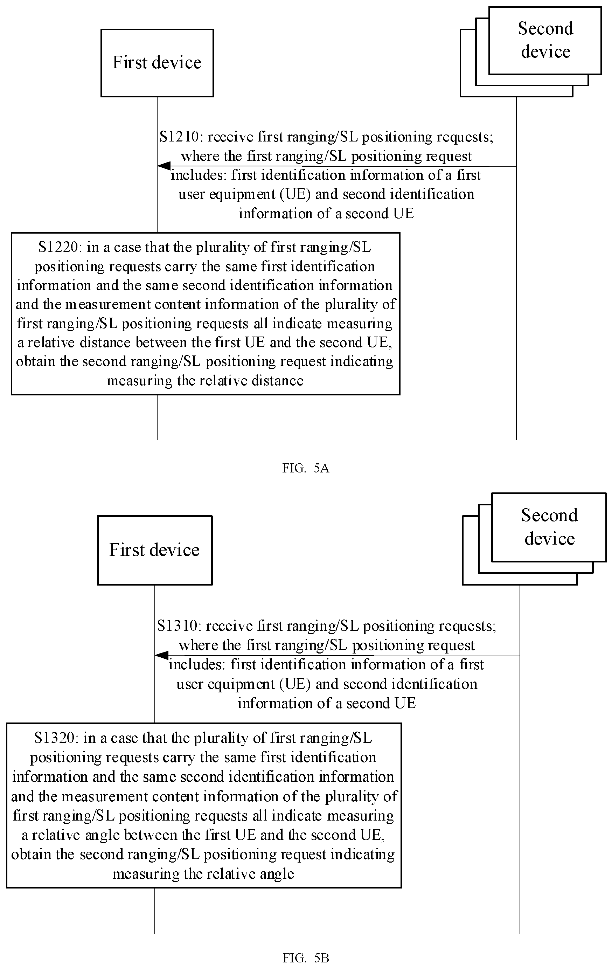

As shown in FIG. 5A, an embodiment of the present disclosure provides an information processing method, which is performed by a first device and includes the following steps.

In S1210, first ranging/SL positioning requests are received; where the first ranging/SL positioning request includes: first identification information of a first user equipment (UE) and second identification information of a second UE.

In S1220, in a case that the plurality of first ranging/SL positioning requests carry the same first identification information and the same second identification information and the measurement content information of the plurality of first ranging/SL positioning requests all indicate measuring a relative distance between the first UE and the second UE, the second ranging/SL positioning request indicating measuring the relative distance is obtained.

In an embodiment of the present disclosure, if the measurement content information contained in the plurality of first measurement/SL positioning requests all indicate the measurement of relative distance, then the measurement content information contained in the obtained one second ranging/SL positioning request will also indicate the measurement of the relative distance between the first UE and the second UE.

It should be noted that the information processing method shown in FIG. 5A may be executed independently, or may be executed corresponding to any one of the aforementioned information processing method embodiments.

As shown in FIG. 5B, an embodiment of the present disclosure provides an information processing method, which is performed by a first device and includes the following steps.

In S1310, first ranging/SL positioning requests are received; where the first ranging/SL positioning request includes: first identification information of a first user equipment (UE) and second identification information of a second UE.

In S1320, in a case that the plurality of first ranging/SL positioning requests carry the same first identification information and the same second identification information and the measurement content information of plurality of first ranging/SL positioning requests all indicate measuring a relative angle between the first UE and the second UE, the second ranging/SL positioning request indicating measuring the relative angle is obtained.

In an embodiment of the present disclosure, if the measurement content information contained in the plurality of first measurement/SL positioning requests all indicate the measurement of the relative angle, then the measurement content information contained in the obtained one second ranging/SL positioning request will also indicate the measurement of the relative angle between the first UE and the second UE.

It should be noted that the information processing method shown in FIG. 5B may be executed independently, or may be executed in correspondence with any of the aforementioned information processing method embodiments.

In the embodiments of the present disclosure, the information processing methods shown in FIGS. 5A and 5B may both be combining of the first measurement/SL positioning requests with the same measurement content for the first UE and the second UE.

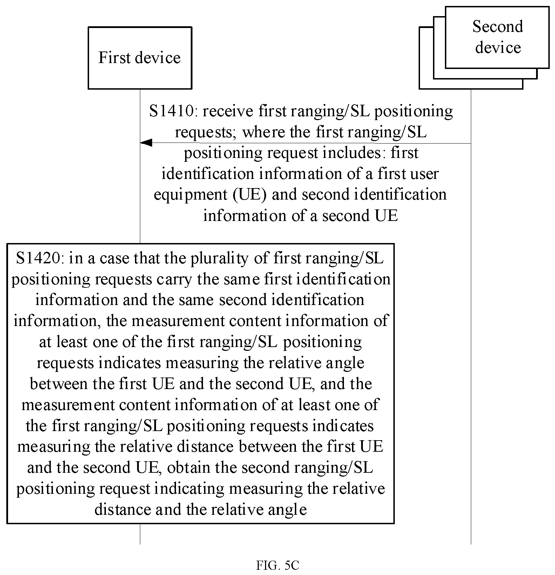

As shown in FIG. 5C, an embodiment of the present disclosure provides an information processing method, which is performed by a first device and includes the following steps.

In S1410, first ranging/SL positioning requests are received; where the first ranging/SL positioning request includes: first identification information of a first user equipment (UE) and second identification information of a second UE;
In S1420, in a case that the plurality of first ranging/SL positioning requests carry the same first identification information and the same second identification information, the measurement content information of at least one of the first ranging/SL positioning requests indicates measuring the relative angle between the first UE and the second UE, and the measurement content information of at least one of the first ranging/SL positioning requests indicates measuring the relative distance between the first UE and the second UE, the second ranging/SL positioning request indicating measuring the relative distance and the relative angle is obtained.

For example, in the case that the plurality of first ranging/SL positioning requests carry the same first identification information and the same second identification information, the measurement content information of at least one of the first ranging/SL positioning requests indicating measuring the relative angle between the first UE and the second UE, includes:
there being one first ranging/SL positioning request carrying measurement content information indicating simultaneous measurement of the relative distance and the relative angle, and the remaining other first ranging/SL positioning requests carrying measurement content information indicating measurement of the relative angle and/or the relative distance,
   or,
there being at least one first ranging/SL positioning request carrying measurement content information indicating the measurement of the relative distance, and there being also at least one first ranging/SL positioning request carrying measurement content information indicating the measurement of the relative angle.

In this case, the measurement content information carried by the combined second ranging/SL positioning request indicates that the relative angle and the relative distance are measured simultaneously.

In the embodiment of the present disclosure, if the measurement content information contained in the plurality of first measurement/SL positioning requests all indicates the measurement of the relative angle and/or the relative distance, then the measurement content information contained in the obtained one second ranging/SL positioning request will also indicate the measurement of the relative angle and the relative distance of the first UE and the second UE.

It should be noted that the information processing method shown in FIG. 5C may be executed independently, or may be executed in correspondence with any one of the aforementioned information processing method embodiments.

In the embodiments of the present disclosure, the information processing method shown in FIG. 5C may all be combination for first measurement/SL positioning requests with the same first UE and the second UE but different measurement contents.

In some embodiments, in the case that the plurality of received first ranging/SL positioning requests carry the same first identification information and the same second identification information, combining the plurality of first ranging/SL positioning requests to obtain one second ranging/SL positioning request includes:
in a case that the plurality of first ranging/SL positioning requests carry the same first identification information and the same second identification information and measurement moments corresponding to the plurality of first ranging/SL positioning requests meet similar conditions, combining the plurality of first ranging/SL positioning requests to obtain the one second ranging/SL positioning request.

Due to the mobility of UE, the relative position between the first UE and the second UE may change at different times. Taking this into account, when combining the plurality of first ranging/SL positioning requests, it is necessary to consider whether the measurement moments are the same or close to each other. Therefore, it is necessary to combine these first ranging/SL positioning requests to obtain one second ranging/SL positioning request only when the plurality of first ranging/SL positioning requests carry the same first identification information and the same second identification information, and the corresponding measurement moments of the plurality of first ranging/SL positioning requests are the same or similar.

In some embodiments, if scheduling time information is not carried in the first ranging/SL positioning request, the measurement moment of the first ranging/SL positioning request is a reception moment of the first ranging/SL positioning request; or, if the scheduling time information is carried in the first ranging/SL positioning request, the measurement moment of the first ranging/SL positioning request is a moment indicated by the scheduling time information.

In some embodiments, if the scheduling time information is not carried in the first ranging/SL positioning request, it may be defaulted that the measurement moment of the first ranging/SL positioning request is a reception moment when the first ranging/SL positioning request is received.

In one embodiment, the measurement moments meet the similar conditions, which includes at least one of the following:
a time difference between the measurement moments of the plurality of first ranging/SL positioning requests is within a duration range; and
the measurement moments of the plurality of first ranging/SL positioning requests are within a same preset time unit.

The time difference between the measurement moments of the plurality of first ranging/SL positioning requests is within a duration range, which may include: a maximum time difference between the measurement moments of the plurality of first ranging/SL positioning requests is within the duration range. The duration range may be any pre-set value, for example, the duration range may be: an empirical value or a statistical value. In another exemplary embodiment, the value of the duration range may be a configuration value of a network device.

In another embodiment, the time difference between the measurement moments of the plurality of first ranging/SL positioning requests is not calculated, but it is determined whether they are located in the same preset time unit according to the distribution of the plurality of first ranging/SL positioning requests in the time domain. The preset time unit may be any specified time length determined by the start and end moment. The specified time length may be: within 1 second, 10 milliseconds or 30 seconds.

Of course, the above is merely an example of determining that the measurement moments meet the similar conditions, and the specific implementation is not limited to the above example.

In some embodiments, the first ranging/SL positioning request includes quality of service (QoS) information; and
QoS information included in the second ranging/SL positioning request is: the QoS information requiring the highest QoS value in the plurality of first ranging/SL positioning requests.

If QoS values indicated by the QoS information carried by the plurality of first ranging/SL positioning requests are different, and if the combining conditions for the plurality of first ranging/SL positioning requests are met, the second ranging/SL positioning request may be determined according to the highest required QoS value. If the second ranging/SL positioning request includes the QoS information with the highest QoS value, the measurement performed according to the second ranging/SL positioning request can meet the highest required QoS value, and inherently also meet a lower required QoS value.

The QoS values include but are not limited to measurement delay and/or accuracy of measurement results, etc.

In some embodiments, if the QoS information is not carried in the first ranging/SL positioning request, the QoS value required by the corresponding first ranging/SL positioning request may be a default QoS value or a preset QoS value, or the lowest QoS value of the ranging service. The default QoS value or the preset QoS value may be equal to the lowest QoS value or an intermediate level among the plurality of QoS levels, etc.

Of course, the above is just an example. In one embodiment, if some of the plurality of first ranging/SL positioning requests carry the QoS information and the other part does not carry the QoS value, the QoS requirement of the first ranging/SL positioning request that does not carry the QoS information may be equal to the QoS requirement corresponding to the first ranging/SL positioning request that carries the QoS information by default.

In some embodiments, the first device is the first UE or the second UE, and the method further includes:
obtaining one measurement result by performing ranging between the first UE and the second UE according to the second ranging/SL positioning request; and
sending a plurality of first ranging/SL positioning responses to second devices that send the first ranging/SL positioning requests respectively, according to the one measurement result.

When the first device that performs the above-mentioned combining of plurality of first ranging/SL positioning requests is the aforementioned UE, and the UE may be the first UE or the second UE, the first device may directly calculate the measurement result based on a piece of measurement data obtained in response to the one second ranging/SL positioning request.

The measurement data includes but is not limited to at least one of the following:
Reference Signal Time Difference (RSTD);
Relative Time of Arrival (RTOA);
Angle of Arrival (AOA);
Angle-of-Departure (AoD);
Time of Arrival (TOA);
Reference Signal Received Power (RSRP);
Reference Signal Received Path Power (RSRPP);
Channel Impulse Response (CIR); and
Observation arrival time difference (OATD).

The measurement result may include at least one of the following:
the relative distance;
the relative angle; and
the absolute position, etc.

The measurement result between the first UE and the second UE may be obtained by calculating the measurement data.

In some embodiments, the first device is a network device, and the method further includes:
sending the second ranging/SL positioning request to the first UE and/or the second UE;
acquiring a piece of measurement data or a measurement result obtained based on the second ranging/SL positioning request; where the measurement data is used to generate the measurement result; and
according to the measurement results, sending a plurality of first ranging/SL positioning responses to second devices that send the first ranging/SL positioning requests respectively.

If the first device is a network device, the network device includes but is not limited to an access network device and/or a core network device. The access network device may be an evolved base station (eNB) or a next generation base station (gNB). The core network device includes but is not limited to a location management function (LMF).

The first device is a network device, and the plurality of first ranging/SL positioning requests are no longer sent to the first UE and/or the second UE. The first UE and/or the second UE returns a piece of measurement data or one measurement result. If the network device receives a piece of measurement data, the measurement result may be generated based on the piece of measurement data.

A measurement result is obtained based on a piece of measurement data, and the measurement result is returned to the second device that sends the first ranging/SL positioning request.

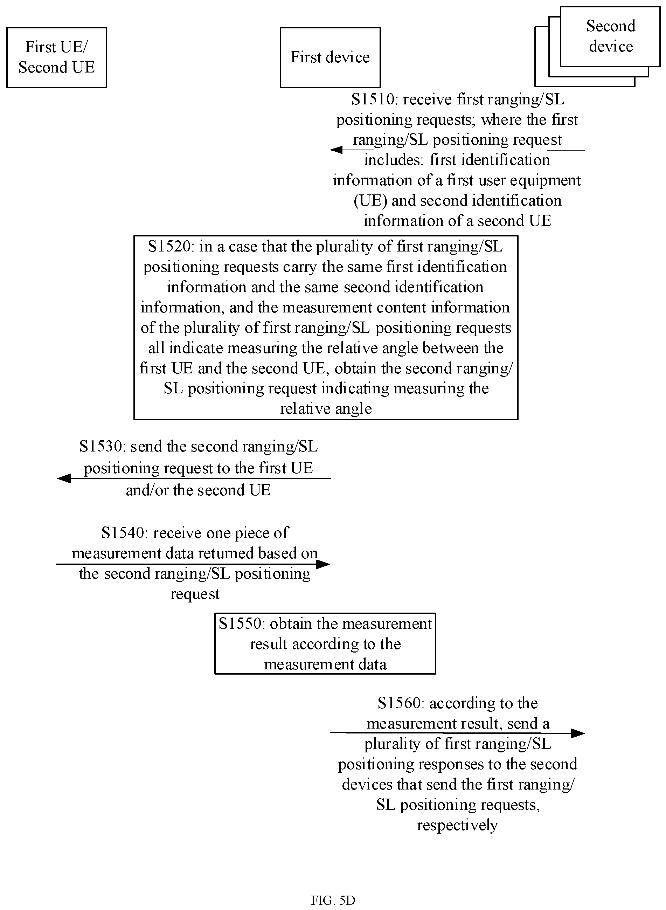

As shown in FIG. 5D, an embodiment of the present disclosure provides an information processing method, which is performed by a network device and includes the following.

In S1510, first ranging/SL positioning requests are received; where the first ranging/SL positioning request includes: first identification information of a first user equipment (UE) and second identification information of a second UE.

In S1520, in a case that the plurality of first ranging/SL positioning requests carry the same first identification information and the same second identification information, and the measurement content information of the plurality of first ranging/SL positioning requests all indicate measuring the relative angle between the first UE and the second UE, the second ranging/SL positioning request indicating measuring the relative angle is obtained.

In S1530, the second ranging/SL positioning request is sent to the first UE and/or the second UE.

In S1540, one piece of measurement data returned based on the second ranging/SL positioning request is received.

In S1550, the measurement result is obtained according to the measurement data.

In S1560, according to the measurement result, the plurality of first ranging/SL positioning responses are sent to the second devices that send the first ranging/SL positioning requests, respectively.

If the LMF converts the measurement data into a measurement result, then after generating the second ranging/SL positioning request, the LMF will send the second ranging/SL positioning request to the first UE and/or the second UE.

In some embodiments, the LMF may send the second ranging/SL positioning request to the first UE and/or the second UE through an access network device such as a base station. Alternatively, the LMF may send the second ranging/SL positioning request to the first UE and/or the second UE through a base station and a User Equipment to Network (U2N) relay.

Since the LMF itself generates the measurement result based on the measurement data, and since the plurality of first ranging/SL positioning requests are converted into one second ranging/SL positioning request, the LMF will receive one piece of measurement data, which may be used to determine the relative position and/or the relative distance between the first UE and the second UE.

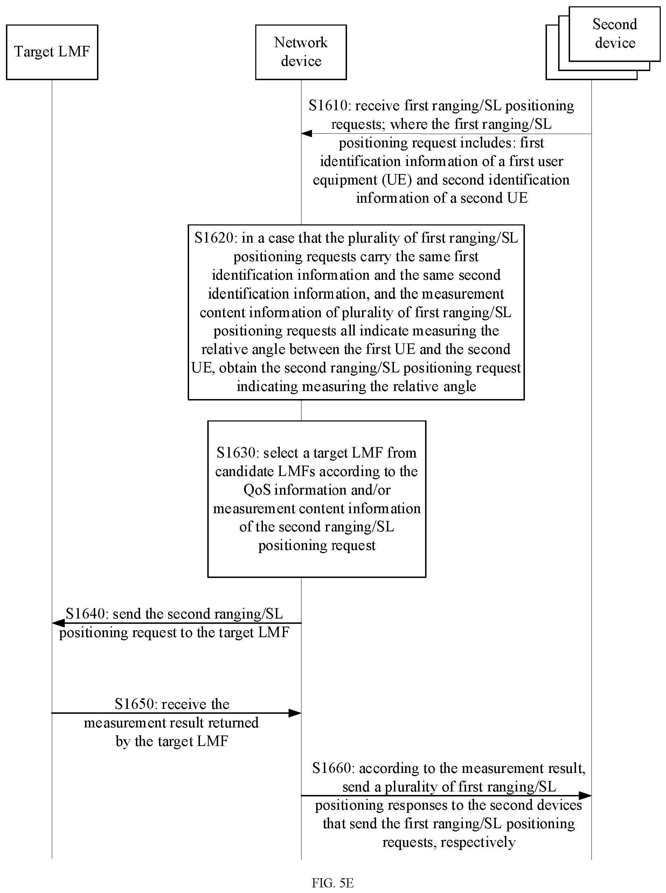

As shown in FIG. 5E, an embodiment of the present disclosure provides an information processing method, which is performed by a network device and includes the following.

In S1610, first ranging/SL positioning requests are received; where the first ranging/SL positioning request includes: first identification information of a first user equipment (UE) and second identification information of a second UE.

In S1620, in a case that the plurality of first ranging/SL positioning requests carry the same first identification information and same the second identification information, and the measurement content information of plurality of first ranging/SL positioning requests all indicate measuring the relative angle between the first UE and the second UE, the second ranging/SL positioning request indicating measuring the relative angle is obtained.

In S1630, a target LMF from candidate LMFs is selected according to the QoS information and/or measurement content information of the second ranging/SL positioning request.

In S1640, the second ranging/SL positioning request is sent to the target LMF.

In S1650, the measurement result returned by the target LMF is received.

In S1660, according to the measurement result, the plurality of first ranging/SL positioning responses are sent to the second devices that send the first ranging/SL positioning requests, respectively.

If the first device is not a network device of an LMF, the first device may directly receive the measurement result from the first UE or the second UE, or receive the measurement result from a selected target LMF.

If the first device is not an LMF, the first device may be an access management function (AMF), a session management function (SMF), a gateway mobile location center (GMLC), a base station or other network devices. The positioning service mainly uses the OSA MM interface to send a positioning request to the OSA gateway. The OSA gateway obtains the location information through interaction with the gateway mobile location center (GMLC) and returns it to the application.

A plurality of candidate LMFs are deployed in the core network. Different candidate LMFs may be able to satisfy different maximum QoS values, so a target AMF for the ranging service that can provide the QoS value required by the second ranging/SL positioning request may be selected according to the QoS information carried in the second ranging/SL positioning request.

The measurement content information indicates the measurement content, which may include but is not limited to: the relative distance and/or the relative angle between the first UE and the second UE, etc.

Different candidate LMFs may provide different ranging services. For example, some provide relative distance ranging services, some provide relative angle ranging services, and some provide relative distance and relative angle ranging services. Therefore, a target LMF supporting corresponding measurement content may be selected from the candidate LMFs according to the measurement content information included in the second ranging/SL positioning service.

If the target LMF is determined, the second ranging/SL positioning request is sent to the target LMF, and the target LMF may further provide the second ranging/SL positioning request to the first UE and/or the second UE.

The first UE and/or the second UE receives the second ranging/SL positioning request to perform positioning measurement. If the first UE and/or the second UE supports the calculation of measurement results or enables the calculation of measurement results, the target LMF will receive a measurement result, otherwise the target LMF may receive a piece of measurement data to be converted into a measurement result. Of course, even if the first UE and/or the second UE supports the conversion of measurement data into measurement results, the target UE may still receive measurement data.

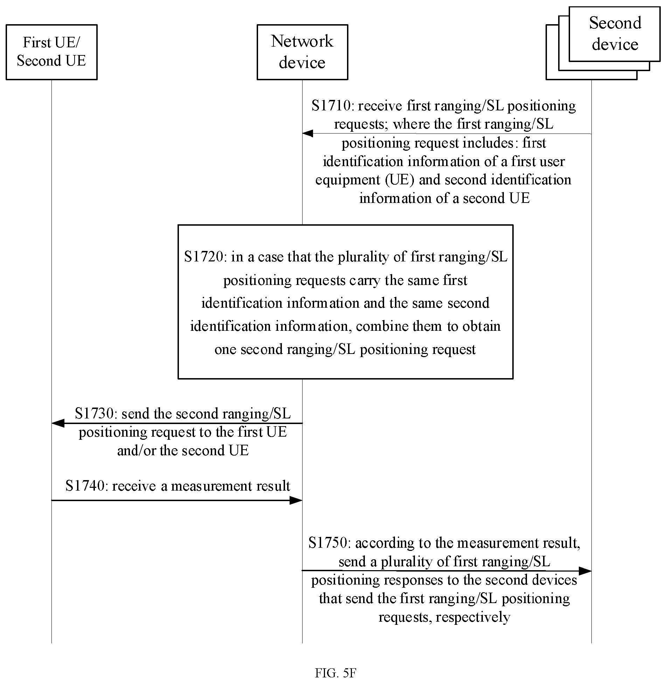

As shown in FIG. 5F, an embodiment of the present disclosure provides an information processing method, which is executed by a network device and includes the following.

In S1710, first ranging/SL positioning requests are received; where the first ranging/SL positioning request includes: first identification information of a first user equipment (UE) and second identification information of a second UE.

In S1720, in a case that the plurality of first ranging/SL positioning requests carry the same first identification information and the same second identification information, they are combined to obtain one second ranging/SL positioning request;
In S1730, the second ranging/SL positioning request is sent to the first UE and/or the second UE.

In S1740, a measurement result is received.

In S1750, according to the measurement result, a plurality of first ranging/SL positioning requests are sent to the second devices that send the first ranging/SL positioning requests, respectively.

In this embodiment, the first UE and the second UE directly generate the measurement result, so that the network device will receive the measurement result.

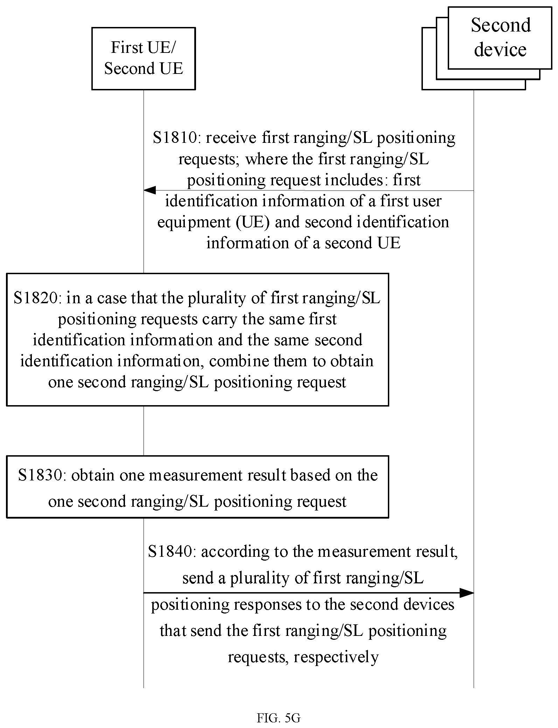

As shown in FIG. 5G, an embodiment of the present disclosure provides an information processing method, which is performed by a first UE or a second UE, and includes the following.

In S1810, first ranging/SL positioning requests are received; where the first ranging/SL positioning request includes: first identification information of a first user equipment (UE) and second identification information of a second UE.

In S1820, in a case that the plurality of first ranging/SL positioning requests carry the same first identification information and the same second identification information, they are combined to obtain one second ranging/SL positioning request.

In S1830, one piece of measurement data or one measurement result is obtained based on the one second ranging/SL positioning request.

In S1840, according to the measurement result, a plurality of first ranging/SL positioning requests are sent to the second devices that send the first ranging/SL positioning requests, respectively.

In this embodiment, at least one of the first UE and the second UE serves as the first device, and the first UE or the second directly generates the measurement result and directly sends the measurement result to each of the second devices that send the first ranging/SL positioning requests based on SL or network connection.

In some embodiments, the method further includes:
determining whether to respond to the first ranging/SL positioning request according to authorization information;
in the case that the plurality of first ranging/SL positioning requests are received and the first ranging/SL positioning requests carry the same first identification information and the same second identification information, combining the plurality of first ranging/SL positioning requests to obtain one second ranging/SL positioning request, includes:
in a case that the plurality of received first ranging/SL positioning requests that are determined to be responded carry the same first identification information and the same second identification information, combining the plurality of first ranging/SL positioning requests to obtain the one second ranging/SL positioning request.

The authorization information may include at least one of the following:
first authorization information, indicating whether the first UE is authorized to participate in the ranging service;
second authorization information, indicating whether the second UE is authorized to participate in the ranging service; and
third authorization information, indicating whether the second device of the first ranging/SL positioning request is authorized to request the ranging service.

Of course, the above are only examples of the authorization information, and the specific implementation is not limited to the above examples.

The authorization information may be policy rules or specific policy information for determining the second device, the first UE, and/or the second UE of the first ranging/SL positioning request to be authorized.

In some embodiments, the authorization information may be stored in a user data management (UDM) or a unified data repository (UDR), then the first device may acquire the authorization information from the UDM or UDR and determine whether it is authorized to obtain the ranging service, thereby ensuring whether the first UE, the second UE and/or the second device sending the first ranging/SL positioning request has authorization verification to participate in the ranging service.

In some embodiments, the authorization information includes: authorization policy information, which is used to verify whether the sender of the first ranging/SL positioning request has the authority to obtain the measurement result between the first UE and the second UE;
and/or,
privacy setting information, which is used to determine whether the privacy settings of the first UE and the second UE allow the sender of the first ranging/SL positioning request to acquire the measurement result between the first UE and the second UE.

The authorization policy information may have a policy control function (PCF). The privacy policy information may be stored in a UDM and/or a UDR, etc.

The privacy setting information may be determined according to user contract information and/or operator policy, etc. The privacy setting information may indicate whether the corresponding UE can serve as an observer UE, a target UE and/or a reference UE in the ranging service.

When the AF(s) and/or client UE(s) want to get ranging/SL positioning information between UE1 and UE2, they will send ranging/SL positioning requests to the UE1 via 5GC and over PC5 respectively.

The request includes UE IDs, result content (the relative direction and/or distance of the UE1 and the UE2), required QoS value and planned measurement time. The QoS value may be QoS related to LoCation service (LCS) or QoS related to ranging. The measurement time may also be called scheduling time, which is optional content carried by the request.

The 5th Generation Core (5GC) network function (NF) and/or UE1 recognizes there are concurrent ranging/SL positioning requests and then checks the privacy setting, QoS requirement, measurement content information and planned measurement time of these requests.

If allowed by the privacy setting and QoS requirement, the 5GC NF and/or the UE1 may combine requests by executing one of the requests and using the ensuing ranging/SL positioning information to satisfy the other requests, without fully executing the latter.

After receiving the request, the UE1 discovers the UE2 over the PC5 and establishes a connection with the PC5, as shown in TS 23.304. Then the UE1 sends a ranging/SL positioning request to the UE2 to negotiate ranging parameters, e.g., deciding Reference UE and Target UE. And UE2 sends a response to UE1.

The UE1 and the UE2 may also combine concurrent sensing requests based on QoS requirements, measurement content information, measurement time and role (the reference UE or the target UE).

Based on the negotiated parameters, UE1 and UE2 perform ranging/SL positioning. The result can be calculated by the reference UE or 5GC and then sent to the AF(s)/client UE(s).

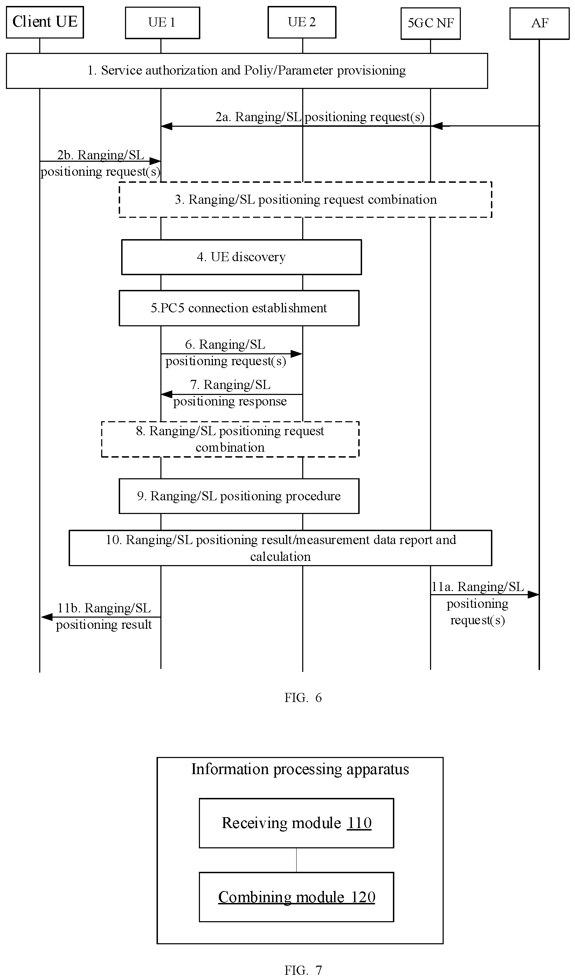

Referring to FIG. 6, an information processing method provided by the present disclosure may include the following.
1. Service authorization, policy and parameter regulations. For example, UE1 and UE2 may get the ranging authorization policy and parameters from PCF during the registration procedure. The ranging authorization policy and parameters may include whether the terminal is authorized as a "reference UE" or a "target UE".
2a. 5GC NF receives the ranging/SL positioning request(s) from AF.
2b. UE1 receives the ranging/SL positioning request(s) from the client UE.

For example, when AF(s) and/or client UE(s) want to get ranging/SL positioning information between UE1 and UE2, they will send ranging/SL positioning requests to UE1 via 5GC and over PC5 respectively.

The ranging/SL positioning requests from AF are sent to 5GC NF via NEF.

3. Ranging/SL positioning request(s) combination. The 5GC NF and/or UE1 recognizes concurrent ranging/SL positioning requests. If allowed by the privacy settings and the QoS requirement, the result content, scheduling time (if have) can be satisfied, and 5GC NF and/or UE1 may combine these concurrent requests by executing one of the requests and using the ensuing sensing information to satisfy the other requests without fully executing the latter.

Note: All 5GC NFs involved in the ranging/SL process are able to perform combination, such as NEF, GMLC, AMF, LMF.

4. UE mutual discovery (UE discovery). For example, UE1 performs UE discovery to find UE2.

5. PC5 connection establishment. PC5 connection is established between UE1 and UE2.

6-7. UE1 sends a ranging/SL positioning request, and UE2 sends a corresponding response back to UE1. During this procedure, the ranging/SL positioning parameters are negotiated, such as the reference UE and the target UE.

8. Ranging/SL positioning request(s) combination. UE1 and UE2 may also combine the concurrent perception requests based on QoS requirements, result content, scheduling time (if have) and role (the reference UE or the target UE).

9. Ranging/SL positioning request(s) procedure. Ranging/sidelink positioning between UE1 and UE2 is performed.

10. Ranging/SL positioning result/measurement data and calculation. For example, the measurement result can be calculated by the reference UE. Alternatively, the ranging/SL positioning measurement data can be sent to 5GC for further processing.

11a. 5GC NF sends the ranging/SL positioning result to AF.

11b. UE1 sends the ranging/SL positioning result to the client UE.

The result is sent to AF via 5GC and then to the Client UE via PC5.

As shown in FIG. 7, an embodiment of the present disclosure provides an information processing apparatus, where the apparatus includes:
a receiving module 110, configured to receive a first ranging/sidelink (SL) positioning request; where the first ranging/SL positioning request includes: first identification information of a first user equipment (UE) and second identification information of a second UE; and
a combining module 120, configured to combine a plurality of first ranging/SL positioning requests to obtain one second ranging/SL positioning request in a case that the plurality of first ranging/SL positioning requests are received and the first ranging/SL positioning requests carry the same first identification information and the same second identification information.

For example, a measurement result of the second ranging/SL positioning request is used to respond to each of the first ranging/sidelink (SL) positioning requests.

The information processing apparatus according to the embodiments of the present disclosure may include a first device.

In some embodiments, the receiving module 110 and the combining module 120 may be program modules; after the program modules are executed by a processor, operations can be implemented.

In some other embodiments, the receiving module 110 and the combining module 120 may be programmable modules; the programmable modules include but are not limited to field programmable modules and/or complex programmable modules.

In some other embodiments, the receiving module 110 and the combining module 120 may be pure hardware modules; the pure hardware modules include application-specific integrated circuits.

In some other embodiments, the first ranging/SL positioning request includes: measurement content information indicating measurement content.

The combining module 120 is specifically configured to perform at least one of:
in a case that the plurality of first ranging/SL positioning requests carry the same first identification information and the same second identification information and the measurement content information of the plurality of first ranging/SL positioning requests all indicate measuring a relative distance between the first UE and the second UE, obtaining the second ranging/SL positioning request indicating measuring the relative distance;
in a case that the plurality of first ranging/SL positioning requests carry the same first identification information and the same second identification information and the measurement content information of the plurality of first ranging/SL positioning requests all indicate measuring a relative angle between the first UE and the second UE, obtaining the second ranging/SL positioning request indicating measuring the relative angle;
in a case that the plurality of first ranging/SL positioning requests carry the same first identification information and the same second identification information, the measurement content information of at least one of the first ranging/SL positioning requests indicates measuring the relative angle between the first UE and the second UE, and the measurement content information of at least one of the first ranging/SL positioning requests indicates measuring the relative distance between the first UE and the second UE, obtaining the second ranging/SL positioning request indicating measuring the relative distance and the relative angle.

In some other embodiments, the combining module 120 is specifically configured to combine the plurality of first ranging/SL positioning requests to obtain one second ranging/SL positioning request when the plurality of first ranging/SL positioning requests carry the same first identification information and the same second identification information and measurement moments corresponding to the plurality of first ranging/SL positioning requests meet similar conditions.

In some other embodiments, if the first ranging/SL positioning request does not carry scheduling time information, the measurement moment of the first ranging/SL positioning request is a reception moment of the first ranging/SL positioning request;
or,
if the first ranging/SL positioning request carries the scheduling time information, the measurement moment of the first ranging/SL positioning request is the moment indicated by the scheduling time information.

In some other embodiments, the measurement times satisfying the similar conditions includes at least one of the following:
a time difference between the measurement moments of the plurality of first ranging/SL positioning requests is within a duration range; and
the measurement moments of the plurality of first ranging/SL positioning requests are located within a same preset time unit.

In some other embodiments, the first ranging/SL positioning request includes quality of service (QoS) information; and
QoS information included in the second ranging/SL positioning request is: the QoS information requiring the highest QoS value in the plurality of first ranging/SL positioning requests.

In some other embodiments, the first device is the first UE or the second UE, and the apparatus further includes:
an obtaining module, configured to obtain one measurement result by performing ranging between the first UE and the second UE according to the second ranging/SL positioning request; and
a first sending module, configured to send a plurality of first ranging/SL positioning responses to second devices that send the first ranging/SL positioning requests respectively, according to the measurement result.

In some other embodiments, the first device is a network device, and the apparatus further includes:
a second sending module, configured to send the second ranging/SL positioning request to the first UE and/or the second UE;
an acquisition module, configured to acquire one piece of measurement data or a measurement result obtained based on the second ranging/SL positioning request; where the measurement data is used to generate the measurement result; and
the second sending module, specifically configured to send a plurality of first ranging/SL positioning responses to second devices that send the first ranging/SL positioning requests, respectively, according to the measurement result.

In some other embodiments, the network device is a location management function (LMF), and the acquisition module is specifically used to receive one piece of measurement data returned based on the second ranging/SL positioning request; obtain the measurement result based on the measurement data; and send the plurality of first ranging/SL positioning responses to the second devices that send the first ranging/SL positioning requests, respectively, based on the measurement result.

In some other embodiments, the network device is not an LMF, where the apparatus further includes:
a selection module, configured to select a target LMF from candidate LMFs according to the QoS information and/or measurement content information of the second ranging/SL positioning request; and
a third sending module, configured to send the second ranging/SL positioning request to the target LMF; and
the acquisition module, configured to receive the measurement result returned by the target LMF.

In some other embodiments, the apparatus further includes:
a determination module, configured to determine whether to respond to the first ranging/SL positioning request according to authorization information; and
the combining module 120, configured to combine the plurality of first ranging/SL positioning requests to obtain the one second ranging/SL positioning request in a case that the plurality of received first ranging/SL positioning requests that are demined to be responded carry the same first identification information and the same second identification information.

In some other embodiments, the authorization information includes: authorization policy information, which is used to verify whether a sender of the first ranging/SL positioning request has an authority to acquire a measurement result between the first UE and the second UE;
and/or,
privacy setting information, which is used to determine whether the privacy settings of the first UE and the second UE allow the sender of the first ranging/SL positioning request to acquire the measurement results between the first UE and the second UE.

The present disclosure provides an information processing method, where the method includes:
sending, by a second device, a first ranging/sidelink (SL) positioning request; where the first ranging/SL positioning request includes: first identification information of a first user equipment (UE) and second identification information of a second UE; and
receiving, by a first device, the first ranging/sidelink (SL) positioning request; in a case that a plurality of first ranging/SL positioning requests are received and the first ranging/SL positioning requests carry the same first identification information and the same second identification information, combining the plurality of first ranging/SL positioning requests to obtain one second ranging/SL positioning request, where a measurement result of the second ranging/SL positioning request is used to respond to each of the first ranging/sidelink SL positioning requests;
where the first UE and the second UE perform measurement according to the second ranging/SL positioning request to obtain one piece of measurement data or one measurement result; where the measurement data is used to generate the measurement result.

The second device may be any sending end that sends the first ranging/SL positioning request. The first device is a device that receives the first ranging/SL positioning request and performs combining.

The information processing method provided by the embodiments of the present disclosure may also be used for the first device and/or the second device to execute the information processing method provided by any of the above technical solutions, for example, at least one of the methods shown in FIG. 2, FIG. 5A to FIG. 5G, or FIG. 6.

The present disclosure provides a communication system, which includes:
a first device, configured to send a first ranging/sidelink (SL) positioning request; where the first ranging/SL positioning request includes: first identification information of a first user equipment (UE) and second identification information of a second UE; and
a first device, configured to receive the first ranging/sidelink (SL) positioning request; in a case that a plurality of first ranging/SL positioning requests are received and the first ranging/SL positioning requests carry the same first identification information and the same second identification information, combine the plurality of first ranging/SL positioning requests to obtain one second ranging/SL positioning request, where a measurement result of the second ranging/SL positioning request is used to respond to each of the first ranging/sidelink (SL) positioning requests;
where the first UE and the second UE are configured to perform measurement according to the second ranging/SL positioning request to obtain one piece of measurement data or one measurement result; where the measurement data is used to generate the measurement result.

The communication system may be used to execute the information processing method provided by any of the above technical solutions, for example, to execute at least one of the methods shown in FIG. 2, FIG. 5A to FIG. 5G, or FIG. 6.

The present disclosure provides a communication device, including:
a memory, configured to store processor-executable instructions; and
processors, respectively connected to the memory;
where, the processor is configured to execute the information processing method provided by any of the above technical solutions.

The processor may include various types of storage media, which are non-transitory computer storage media that can continue to retain information stored thereon after the communication device loses power.

Here, the communication device includes: a UE or a network device.

The processor may be connected to the memory via a bus or the like, and may be used to read an executable program stored in the memory, for example, at least one of the methods shown in FIG. 2, FIG. 5A to FIG. 5G, or FIG. 6.

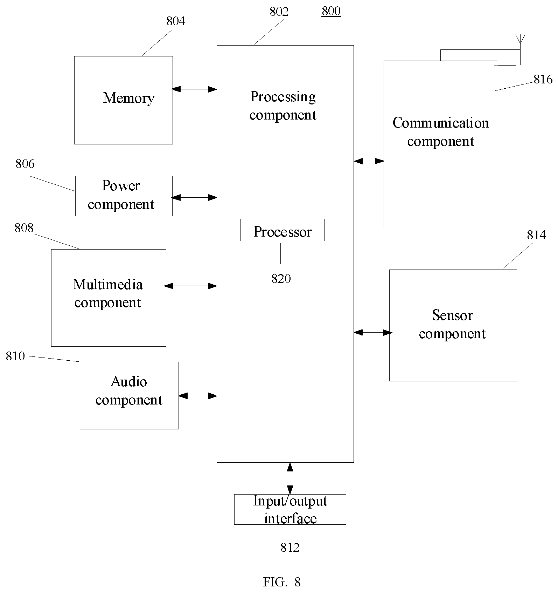

FIG. 8 is a block diagram of a UE 800 shown according to an exemplary embodiment. For example, the UE 800 may be a mobile phone, a computer, a digital broadcast terminal, a messaging device, a gaming console, a tablet, a medical device, an exercise equipment, a personal digital assistant, and the like.

Referring to FIG. 8, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to generate all or part of the steps in the above-described methods. Moreover, the processing component 802 may include one or more modules which facilitate the interaction between the processing component 802 and other components. For instance, the processing component 802 may include a multimedia module to facilitate the interaction between the multimedia component 3008 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the device 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 804, executable by the processor 820 in the UE 800, for generating the above-described methods. For example, the non-transitory computer-readable storage medium may be a ROM, a random access memory (RAM), a CD-ROM, a magnetic tape, a floppy disc, an optical data storage device, and the like.

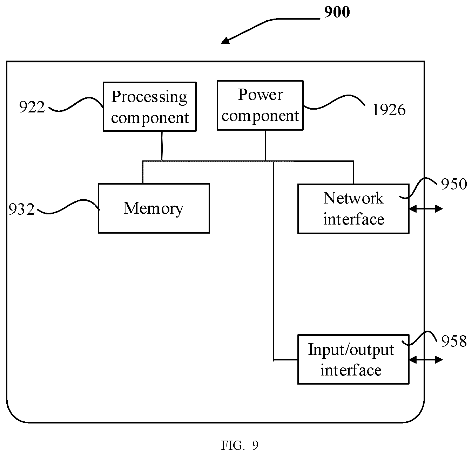

As shown in FIG. 9, an embodiment of the present disclosure illustrates a structure of a network device. Referring to FIG. 9, the network device 900 includes a processing component 922, which further includes one or more processors, and a memory resource represented by a memory 932 for storing instructions executable by the processing component 922, such as an application program. The application program stored in the memory 932 may include one or more modules, each corresponding to a set of instructions. In addition, the processing component 922 is configured to execute instructions to perform any of the above methods applied to the access device, such as at least one of the methods shown in FIG. 2, FIG. 5A to FIG. 5G, or FIG. 6.

The network device 900 may further include a power component 926 configured to perform power management of the network device 900, a wired or wireless network interface 950 configured to connect the network device 900 to a network, and an input/output (I/O) interface 958. The network device 900 may operate based on an operating system stored in the memory 932, such as a Windows Server^{™}, a Mac OS X^{™}, a Unix^{™}, a Linux^{™}, a Free BSD^{™} or the like.

Other embodiments of the present disclosure will be apparent to those skilled in the art from consideration of the specification and practice of the contents disclosed here. The present disclosure is intended to cover any variations, uses, or adaptations of the embodiments of the present disclosure, which follows the general principles thereof and includes the common knowledge or habitual technical means in this technical field that is not disclosed in the present disclosure. The specification and embodiments are considered as exemplary only, with a true scope and spirit of the embodiments of the present disclosure being indicated by the appending claims.

It will be appreciated that the embodiments of the present disclosure are not limited to the exact construction that has been described above and illustrated in the accompanying drawings, and various modifications and changes can be made without departing from the scope thereof. The scope of the embodiments of the present disclosure is only limited by the appended claims.

## Claims

1. An information processing method, performed by a first device, comprising:
receiving a first ranging/sidelink (SL) positioning request; wherein the first ranging/SL positioning request comprises: first identification information of a first user equipment (UE) and second identification information of a second UE; and
in a case that a plurality of first ranging/SL positioning requests are received and the first ranging/SL positioning requests carry same first identification information and same second identification information, combining the plurality of first ranging/SL positioning requests to obtain one second ranging/SL positioning request, wherein a measurement result of the second ranging/SL positioning request is used to respond to each of the first ranging/sidelink (SL) positioning requests.

2. The method according to claim 1, wherein the first ranging/SL positioning request further comprises: measurement content information, wherein the measurement content information indicates measurement content;
in the case that the plurality of first ranging/SL positioning requests are received and the first ranging/SL positioning requests carry the same first identification information and the same second identification information, combining the plurality of first ranging/SL positioning requests to obtain the one second ranging/SL positioning request comprises at least one of following:
in a case that the plurality of first ranging/SL positioning requests carry the same first identification information and the same second identification information and the measurement content information of the plurality of first ranging/SL positioning requests all indicate measuring a relative distance between the first UE and the second UE, obtaining the second ranging/SL positioning request indicating measuring the relative distance;
in a case that the plurality of first ranging/SL positioning requests carry the same first identification information and the same second identification information and the measurement content information of the plurality of first ranging/SL positioning requests all indicate measuring a relative angle between the first UE and the second UE, obtaining the second ranging/SL positioning request indicating measuring the relative angle; and
in a case that the plurality of first ranging/SL positioning requests carry the same first identification information and the same second identification information, the measurement content information of at least one of the first ranging/SL positioning requests indicates measuring the relative angle between the first UE and the second UE, and the measurement content information of at least one of the first ranging/SL positioning requests indicates measuring the relative distance between the first UE and the second UE, obtaining the second ranging/SL positioning request indicating measuring the relative distance and the relative angle.

3. The method according to claim 1 or 2, wherein in the case that the plurality of first ranging/SL positioning requests are received and the first ranging/SL positioning requests carry the same first identification information and the same second identification information, combining the plurality of first ranging/SL positioning requests to obtain the one second ranging/SL positioning request comprises:
in a case that the plurality of first ranging/SL positioning requests carry the same first identification information and the same second identification information and measurement moments corresponding to the plurality of first ranging/SL positioning requests meet similar conditions, combining the plurality of first ranging/SL positioning requests to obtain the one second ranging/SL positioning request.

4. The method according to claim 3, wherein in a case that scheduling time information is not carried in the first ranging/SL positioning request, the measurement moment of the first ranging/SL positioning request is a reception moment of the first ranging/SL positioning request;
or,
in a case that the scheduling time information is carried in the first ranging/SL positioning request, the measurement moment of the first ranging/SL positioning request is a moment indicated by the scheduling time information.

5. The method according to claim 3 or 4, wherein the measurement moments meeting the similar conditions comprises at least one of following:
a time difference between the measurement moments of the plurality of first ranging/SL positioning requests is within a duration range; and
the measurement moments of the plurality of first ranging/SL positioning requests are within a same preset time unit.

6. The method according to any one of claims 1 to 5, wherein the first ranging/SL positioning request comprises quality of service (QoS) information; and
QoS information comprised in the second ranging/SL positioning request is: QoS information requiring a highest QoS value in the plurality of first ranging/SL positioning requests.

7. The method according to any one of claims 1 to 6, wherein the first device is the first UE or the second UE, and the method further comprises:
obtaining one measurement result by performing ranging between the first UE and the second UE according to the second ranging/SL positioning request; and
sending a plurality of first ranging/SL positioning responses to second devices that send the first ranging/SL positioning requests, respectively, according to the one measurement result.

8. The method according to any one of claims 1 to 6, wherein the first device is a network device, and the method further comprises:
sending the second ranging/SL positioning request to the first UE and/or the second UE;
acquiring one piece of measurement data or one measurement result obtained based on the second ranging/SL positioning request, wherein the measurement data is used to generate the measurement result; and
sending a plurality of first ranging/SL positioning responses to second devices that send the first ranging/SL positioning requests, respectively, according to the measurement result.

9. The method according to claim 8, wherein the network device is a location management function (LMF), and acquiring the one measurement result obtained based on the second ranging/SL location request comprises:
receiving the one piece of measurement data returned based on the second ranging/SL positioning request;
obtaining the measurement result according to the measurement data; and
sending the plurality of first ranging/SL positioning responses to the second devices that send the first ranging/SL positioning requests, respectively, according to the measurement result.

10. The method according to claim 8, wherein the method further comprises:
selecting a target LMF from candidate LMFs according to QoS information and/or measurement content information of the second ranging/SL positioning request; and
sending the second ranging/SL positioning request to the target LMF;
wherein acquiring the one measurement result obtained based on the second ranging/SL positioning request comprises:
receiving a measurement result returned by the target LMF.

11. The method according to any one of claims 1 to 10, wherein the method further comprises:
determining whether to respond to the first ranging/SL positioning request according to authorization information;
in the case that the plurality of first ranging/SL positioning requests are received and the first ranging/SL positioning requests carry the same first identification information and the same second identification information, combining the plurality of first ranging/SL positioning requests to obtain the one second ranging/SL positioning request, comprises:
in a case that the plurality of received first ranging/SL positioning requests that are determined to be responded carry the same first identification information and the same second identification information, combining the plurality of first ranging/SL positioning requests to obtain the one second ranging/SL positioning request.

12. The method according to claim 11, wherein the authorization information comprises: authorization policy information, wherein the authorization policy information is used to verify whether a sender of the first ranging/SL positioning request has an authority to acquire a measurement result between the first UE and the second UE;
and/or,
privacy setting information, wherein the privacy setting information is used to determine whether privacy settings of the first UE and the second UE allow the sender of the first ranging/SL positioning request to acquire the measurement result between the first UE and the second UE.

13. An information processing apparatus, comprising:
a receiving module, configured to receive a first ranging/sidelink (SL) positioning request; wherein the first ranging/SL positioning request comprises: first identification information of a first user equipment (UE) and second identification information of a second UE; and
a combining module, configured to combine a plurality of first ranging/SL positioning requests to obtain one second ranging/SL positioning request in a case that the plurality of first ranging/SL positioning requests are received and the first ranging/SL positioning requests carry same first identification information and same second identification information; wherein a measurement result of the second ranging/SL positioning request is used to respond to each of the first ranging/sidelink (SL) positioning requests.

14. An information processing method, comprising:
sending, by a second device, a first ranging/sidelink (SL) positioning request; wherein the first ranging/SL positioning request comprises: first identification information of a first user equipment (UE) and second identification information of a second UE; and
receiving, by a first device, the first ranging/sidelink (SL) positioning request; in a case that a plurality of first ranging/SL positioning requests are received and the first ranging/SL positioning requests carry same first identification information and same second identification information, combining the plurality of first ranging/SL positioning requests to obtain one second ranging/SL positioning request, wherein a measurement result of the second ranging/SL positioning request is used to respond to each of the first ranging/sidelink (SL) positioning requests;
wherein the first UE and the second UE perform measurement according to the second ranging/SL positioning request to obtain one piece of measurement data or one measurement result; wherein the measurement data is used to generate the measurement result.

15. A communication system, comprising:
a second device, configured to send a first ranging/sidelink (SL) positioning request; wherein the first ranging/SL positioning request comprises: first identification information of a first user equipment (UE) and second identification information of a second UE; and
a first device, configured to receive the first ranging/sidelink (SL) positioning request; in a case that a plurality of first ranging/SL positioning requests are received and the first ranging/SL positioning requests carry same first identification information and same second identification information, combine the plurality of first ranging/SL positioning requests to obtain one second ranging/SL positioning request, wherein a measurement result of the second ranging/SL positioning request is used to respond to each of the first ranging/sidelink (SL) positioning requests,
wherein the first UE and the second UE are configured to perform measurement according to the second ranging/SL positioning request to obtain one piece of measurement data or one measurement result; wherein the measurement data is used to generate the measurement result.

16. A communication device, comprising a processor, a transceiver, a memory, and an executable program stored in the memory and capable of being run by the processor, wherein the processor, when running the executable program, executes the method provided in any one of claims 1 to 12 or 14.

17. A computer storage medium, wherein the computer storage medium stores an executable program, and the executable program, when being executed by a processor, implements the method provided in any one of claims 1 to 12 or 14.
